# EUROPÄISCHE PATENTSCHRIFT

(11) **EP 0 960 891 B1**
(45) Veröffentlichungstag und Bekanntmachung des Hinweises auf die Patenterteilung: **23.08.2000**
(21) Anmeldenummer: 99108643.0
(22) Anmeldetag: 12.05.1999
(51) Int. Cl.: C08F 218/04, C08F 210/00, C08F 265/04, C09D 151/00, C09D 131/02, C09J 151/00, C09J 131/02, D06N 3/04, D21H 19/56

(54) **Verfahren zur Herstellung von vernetzbaren Bindemitteln**
Process for the preparation of crosslinkable binders
Procédé de préparation de liants réticulables

(30) Priorität: 22.05.1998 DE 19823099
(43) Veröffentlichungstag der Anmeldung: 01.12.1999
(73) Patentinhaber: Wacker-Chemie GmbH, 81737 München (DE)
(72) Erfinder: Weitzel, Hans-Peter, Dr., 84571 Reischach (DE); Zeh, Harald, Dr., 84489 Burghausen (DE)
(74) Vertreter: Schuderer, Michael, Dr.

(56) Entgegenhaltungen:
- US-A- 3 642 680
- US-A- 4 439 574
- US-A- 5 262 278
- US-A- 5 527 859
- US-A- 5 614 049

## Beschreibung

Die Erfindung betrifft ein Verfahren zur Herstellung von vernetzbaren Bindemitteln sowie deren Verwendung insbesondere als Bindemittel für elastische Beschichtungen.

Wässrige Kunstharzdispersionen und entsprechende Pulver sind schon seit vielen Jahren unersetzliche Additive für Anwendungen im Baubereich insbesondere für Putze, Mörtel, Armierungsmassen, Selbstverlaufsmassen, Fliesenkleber, Farben und Wärmedämmverbundsystemen. Vor allem für hochwertige Putze und Farben werden immer mehr Bindemittel eingesetzt, die diesen Eigenschaften verleihen wie bessere mechanische Eigenschaften, bessere Witterungsbeständigkeit, geringere Verschmutzurigsneigung.

Insbesondere im Außenbereich sind gute mechanische Eigenschaften erforderlich um die im Laufe der Zeit entstehenden Strukturrisse in der Beschichtung zu überbrücken. Um dies zu Erreichen wird vielfach auf Bindemittel zurückgegriffen deren Basisharze sehr niedrige Glastemperaturen (-20°C bis -50°C) besitzen. Auf Grund dieser extrem niedrigen Tg sind die Bindemittel sehr gut tieftemperaturelastisch. Andererseits ist die Oberfläche dieser Beschichtungen dadurch natürlich sehr weich und klebrig und neigt verstärkt zum Anschmutzen, was besonders in Regionen mit widrigen Witterungsbedingungen einen großen Nachteil darstellt. Der Stand der Technik empfiehlt für diesen Anwendungszweck daher nachträglich reaktive Systeme, die durch Initiierung mit Sonnenlicht (UV-Strahlung) vernetzen, oberflächlich aushärten und dadurch verschmutzungsresistent werden.

Aus der EP-A 499835 (US-A 5314936) und der DE-A 4318083 sind Bindemittelzusammensetzungen für Beschichtungsmittel bekannt, welche carbonylgruppen- oder auch amidhaltige, emulgatorstabilisierte Copolymere und aromatische Ketone zu deren UV-Vernetzung enthalten. Die EP-A 441221 betrifft UV-vernetzbare wässrige Beschichtungsmittel auf der Basis einer emulgator-stabilisierten Acrylat- bzw. Vinylester-Polymerdispersion und aromatischen Ketonen, zur Verhinderung von Ausblüherscheinungen auf mineralischen Substraten. Klebfreie nichtschmutzende, elastische Beschichtungen auf der Basis einer (Meth)acrylsäureester-Polymerdispersion und wasserlöslichen Zinkaminkomplexen sind aus der EP-A 324416 (US-A 4980411) bekannt.

In der EP-A 565093 werden Pfropfcopolymere aus Siloxan- und Acrylatmonomer beschrieben, die aufgrund des Siliconanteils gute Dehnung und geringe Anschmutzneigung zeigen. Die Vernetzung des Beschichtungsmittels wird durch den Anteil an Kondensationskatalysator beschleunigt. Aus der EP-A 421787 sind Beschichtungsmittel zur Herstellung elastischer Beschichtungen bekannt, welche aus zwei inkompatiblen Polymeren bestehen, von denen eines N-Methylolacrylamid-Einheiten aufweist. Zur Verschmutzungsneigung vor UV-Einwirkung wird nichts ausgesagt.

Aus der EP-A 522789 sind wässrige Dispersionen zur Herstellung von elastischen Beschichtungen bekannt, welche durch Polymerisation zunächst eines relativ weichen Polymerisats und anschließender Polymerisation eines relativ harten Polymerisats erhalten werden. Den damit erhaltenen core-shell-Polymerdispersionen wurden noch Photosensibilisatoren zur UV-Vernetzung zugesetzt und die Verschmutzungsneigung der damit erhaltenen Anstriche vor und nach UV-Bestrahlung untersucht.

Die EP-A 602763 betrifft UV-vernetzbare Beschichtungsmittel auf der Basis von 2-Stufen-Polymerisaten, wobei die erste Stufe Polymerisate mit mehrfach ethylenisch ungesättigten Monomeren umfaßt, und die zweite Stufe eine säurefunktionelles Polymerisat darstellt, welches sich nach Neutralisation mit Epoxid vernetzen läßt.

Nachteilig bei allen den genannten Systemen ist, daß diese zwar nach UV-Bestrahlung, das heißt im Sonnenlicht, zu verschmutzungsresistenteren Beschichtungen führen, ohne UV-Bestrahlung aber extrem verschmutzungsanfällig sind. Vor allem bei Fassadenanstrichen in beschatteten Bereichen, oder bei Bewitterung verbleiben die weichen Anstriche unvernetzt, und somit verschmutzungsanfällig. Bei Regenbewetterung vor oder nach der Applikation der genannten Systemen besteht überdies auch die Gefahr der Auswaschung des Photoinitiators, was zu starker Reduktion der UV-Sensitivität und letztendlich zu unbefriedigender Vernetzung und Verschmutzungsresistenz der Anstriche führt.

Es bestand somit die Aufgabe, Bindemittel insbesondere für elastische Beschichtungen zur Verfügung zu stellen, welche sowohl im Dunkeln als auch nach UV-Bestrahlung oberflächlich verschmutzungsresistent sind und dennoch über gute Tieftemperaturelastizität verfügen.

Gegenstand der Erfindung ist ein Verfahren zur Herstellung von vernetzbaren Bindemitteln in Form deren wässrigen Dispersionen durch Polymerisation von Vinylestern und Olefinen in Gegenwart von Schutzkolloid, dadurch gekennzeichnet, daß durch Emulsionspolymerisation in Gegenwart eines Schutzkolloids auf der Basis von (Meth)acrylsäureester-Polymerisaten mit 80 bis 95 Gew%, bezogen auf das Gesamtgewicht des Polymers, Acrylsäure- oder Methacrylsäureester von aliphatischen Alkoholen mit 1 bis 12 C-Atomen, und 5 bis 20 Gew%, bezogen auf das Gesamtgewicht des Copolymers, ethylenisch ungesättigten Mono- oder Dicarbonsäuren, und einer Glasübergangstemperatur Tg des Copolymers von 60°C bis 120°C, Vinylester-Olefin-Mischpolymerisate mit einer Tg kleiner -10°C hergestellt werden, und nach Abschluß der Polymerisation die vernetzbaren Gruppen durch Umsetzung der Carbonsäuregruppen der (Meth)-acrylsäureester-Polymerisate mit ethylenisch ungesättigten Verbindungen, welche zur Veresterung der Carboxylgruppe geeignete Funktionen enthalten, eingeführt werden.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 11 C-Atomen, beispielweise VeoVa9^{R}, VeoVa10^{R}, oder VeoVa11^{R} (Handelsnamen der Fa. Shell). Besonders bevorzugt wird Vinylacetat. Geeignete olefinische Comonomere sind Ethylen oder Propylen, vorzugsweise Ethylen. Bevorzugt sind auch Copolymerisate in denen neben Vinylacetat und Ethylen noch 1 bis 30 Gew% weitere Vinylester, beispielsweise Vinyl-2-ethylhexanoat, Vinyllaurat, 1-Methylvinylacetat, Vinylpivalat und Vinylester von alpha-verzweigten Monocarbonsäuren mit 5 bis 11 C-Atomen, copolymerisiert werden.

Die Mengenverhältnisse von Vinylester-Monomer und Olefin-Monomer werden dabei so gewählt, daß eine Glasübergangstemperatur Tg des Mischpolymerisats von kleiner -10°C, vorzugsweise von -50°C bis -20°C resultiert. Die Tg kann mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew%/100) des Monomers n steht, und Tgₙ die Glasübergangstemperatur in Grad Kelvin des Homopolymers des Monomer n ist. Tg-Werte für Homopolymerisate sind in Polymer Handbook 3rd Edition, J. Wiley & Sons, New York (1989) aufgeführt.

Gegebenenfalls können noch 0.05 bis 10.0 Gew%, bezogen auf das Gesamtgewicht der Monomeren, Hilfsmonomere aus der Gruppe umfassend ethylenisch ungesättigte Mono- und Dicarbonsäuren und deren Amide, wie Acrylsäure, Methacrylsäure, Maleinsäure, Fumarsäure, Itaconsäure, Acrylamid, Methacrylamid; ethylenisch ungesättigte Sulfonsäuren bzw. deren Salze, vorzugsweise Vinylsulfonsäure, 2-Acrylamido-propansulfonat und N-Vinylpyrrolidon copolymerisiert werden. Die Angaben in Gewichtsprozent beziehen sich dabei immer auf das Gesamtgewicht des Vinylester/Ethylen-Copolymers und addieren sich auf jeweils 100 Gew%.

Geeignete Schutzkolloide sind solche auf der Basis von (Meth)acrylsäureester-Polymerisaten mit 80 bis 95 Gew%, bezogen auf das Gesamtgewicht des Copolymers, von Einheiten von Acrylsäure- oder Methacrylsäureester aliphatischer Alkohole mit 1 bis 12 C-Atomen, und 5 bis 20 Gew%, bezogen auf das Gesamtgewicht des Copolymers, von Einheiten von ethylenisch ungesättigten Mono- oder Dicarbonsäuren, und einer Glasübergangstemperatur Tg des Copolymers von 60°C bis 120°C, und einem K-Wert nach Fikentscher des Copolymers von 20 bis 50.

Bevorzugte (Meth)acrylsäureester für das Schutzkolloid sind Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat. Besonders bevorzugt sind Methylacrylat, Methylmethacrylat, n-Butylacrylat und 2-Ethylhexylacrylat.

Bevorzugte ethylenisch ungesättigte Carbonsäuren sind Acrylsäure, Methacrylsäure, Maleinsäure, Fumarsäure, Itaconsäure.

Gegebenenfalls können noch 0.05 bis 10.0 Gew%, bezogen auf das Gesamtgewicht der Monomeren, Hilfsmonomere aus der Gruppe umfassend ethylenisch ungesättigte Carbonsäureamide, wie Acrylamid oder Methacrylamid, ethylenisch ungesättigte Sulfonsäuren bzw. deren Salze, vorzugsweise Vinylsulfonsäure, 2-Acrylamido-propansulfonat, hydroxyfunktionelle Comonomere wie Hydroxyethylacrylat, und N-Vinylpyrrolidon copolymerisiert werden.

Am meisten bevorzugt sind Copolymerisate von Methylmethacrylat, Butylacrylat und Methacrylsäure bzw. Acrylsäure.

Die Polymerzusammensetzung des Schutzkolloids wird so gewählt, daß eine Glasübergangstemperatur Tg von 60°C bis 120°C resultiert. Bevorzugt werden Schutzkolloide mit einer Tg von 60°C bis 90°C. Die Glasübergangstemperatur Tg der Polymerisate kann mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew%/100) des Monomers n steht, und Tgₙ die Glasübergangstemperatur in Grad Kelvin des Homopolymers des Monomer n ist. Tg-Werte für Homopolymerisate sind in Polymer Handbook 3rd Edition, J. Wiley & Sons, New York (1989) aufgeführt.
Der K-Wert der Schutzkolloide beträgt 20 bis 50, vorzugsweise 30 bis 40, bestimmt analog DIN 53726 in 1 %-iger Lösung von Tetrahydrofuran in Wasser. K-Wert und Tg der Polymerisate sind dabei so abgestimmt, daß sich das Schutzkolloid auch unter Polymerisationsbedingungen, bei erhöhter Temperatur (30°C bis 80°C) und einem pH von 7 nicht vollständig auflöst, das heißt die Löslichkeit in Wasser unter diesen Bedingungen maximal 10 Gew% der eingesetzten Schutzkolloidmenge beträgt.

Die vernetzbaren Gruppen der Schutzkolloide werden durch polymeranaloge Umsetzung der Carbonsäuregruppen mit ethylenisch ungesättigten Verbindungen erhalten, welche zur Veresterung der Carboxylgruppe geeignet sind und zusätzlich eine ethylenisch ungesättigte Doppelbindung aufweisen, zur Vernetzung durch nachträgliche Polymerisation bei UV-Bestrahlung.

Geeignet sind beispielsweise epoxidfunktionelle, ethylenisch ungesättigte Verbindungen, beispielsweise einfach ethylenisch ungesättigte Monoepoxiden wie Glycidylacrylat, Glycidylmethacrylat, Glycidylvinylether und Glycidylallylether. Geeignet sind auch einfach ethylenisch ungesättigte Isocyanate wie Allylisocyanate und Styrolderivate mit Isocyanatgruppe. Vorzugsweise werden diese Verbindungen in einem molaren Verhältnis zu den Carboxylgruppen des Schutzkolloids von 1 : 1 bis 1 : 2 eingesetzt, um eine möglichst vollständige Veresterung der Carboxylgruppen zu erhalten.

Die Herstellung des als Schutzkolloid verwendeten Copolymers erfolgt nach bekannten Methoden der Emulsionspolymerisation bei niedrigen pH-Werten, circa 2 bis 4. Das Schutzkolloid kann als Dispersion isoliert werden, es kann aber auch in einer ersten Stufe polymerisiert werden und direkt im Anschluß daran im gleichen Reaktionsgefäß die nachfolgende Emulsionspolymerisation des Vinylester/Olefin-Polymerisats durchgeführt werden.

Der Schutzkolloidanteil beträgt 5 bis 20 Gew%, vorzugsweise 8 bis 15 Gew%, bezogen auf das Gesamtgewicht der Comonomere des Vinylester/Olefin-Mischpolymerisats.
Die Herstellung der Vinylester/Olefin-Polymerisate nach dem Emulsionspolymerisationsverfahren wird in Druckreaktoren in einem Temperaturbereich von 30°C bis 80°C und bei einem Druck von 5 bis 85 bar(abs.) durchgeführt und mit den für die Emulsionspolymerisation üblicherweise eingesetzten Methoden eingeleitet. Die Initiierung erfolgt mittels der gebräuchlichen, zumindest teilweise wasserlöslichen Radikalbildner, die vorzugsweise in Mengen von 0.01 bis 3.0 Gew% bezogen auf das Gesamtgewicht der Monomeren, eingesetzt werden. Beispiele hierfür sind Natriumpersulfat, Wasserstoffperoxid, t-Butylperoxid, t-Butylhydroperoxid; Kaliumperoxodiphosphat, Azobisisobutyronitril. Gegebenenfalls können die genannten radikalischen Initiatoren auch in bekannter Weise mit 0.01 bis 0.5 Gew%, bezogen auf das Gesamtgewicht der Monomeren, Reduktionsmittel kombiniert werden. Geeignet sind zum Beispiel Alkaliformaldehydsulfoxylate und Ascorbinsäure. Bei der Redoxinitiierung werden dabei vorzugsweise eine oder beide Redox-Katalysatorkomponenten während der Polymerisation dosiert.

Gegebenenfalls können zusätzlich zu dem Schutzkolloid-Anteil noch 1 bis 10 Gew% Emulgator, bezogen auf das Gewicht des Vinylesterpolymerisats, bei der Polymerisation eingesetzt werden. Geeignete Emulgatoren sind sowohl anionische, kationische als auch nichtionische Emulgatoren. Geeignet sind beispielsweise anionische Tenside, wie Alkylsulfate mit einer Kettenlänge von 8 bis 18 C-Atomen, Alkyl- und Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen. Geeignete nichtionische Tenside sind beispielsweise Alkylpolyglykolether oder Alkylarylpolyglykolether mit 8 bis 40 Ethylenoxid-Einheiten.

Die Polymerisation kann im Batch-, Semi-Batch oder Dosierverfahren aber auch kontinuierlich durchgeführt werden. Bevorzugt wird das Dosierverfahren, wobei der überwiegende Teil der Monomeren kontinuierlich zugeführt wird. Der Schutzkolloid-Anteil kann vollständig vorgelegt oder vollständig dosiert werden, auch eine Kombination von Vorlage und Dosierung ist möglich. Bevorzugt wird die vollständige Vorlage des Schutzkolloids. Während der Polymerisation wird ein pH-Wert von 5 bis 7.5, vorzugsweise 6.5 bis 7.5, eingestellt.

Die Funktionalisierung der Schutzkolloide mit den vernetzbaren Gruppen erfolgt nach Abschluß der Polymerisation des Vinylester/Olefin-Copolymerisats durch Zugabe der funktionellen, ethylenisch ungesättigten Verbindungen in einer Menge von vorzugsweise 100 bis 200 Mol%, bezogen auf die Carbonsäureeinheiten im Schutzkolloid zur Dispersion und anschließendem Rühren bei Temperaturen von vorzugsweise 20°C bis 60°C. Gegebenenfalls kann die Funktionalisierung durch Zugabe eines Katalysators aus der Gruppe der TriphenylphosphoniumHalogenide oder quarternären Ammoniumverbindungen beschleunigt werden. Beispiele hierfür sind Methyl-, Ethyl-, Propyl-, Butyl-Triphenylphosphonium-Bromid. Geeignet sind auch Triphenylphosphonium-Halogenide mit substituiertem Alkylrest wie 2-Carboxyethyl-, 3-Bromopropyl- oder Formylmethyl-Triphenylphosphoniumbromid. Geeignete quarternäre Ammoniumverbindungen sind Tetrabutylammonium-, Benzyltrimethylammonium-, Methyltributylammonium-Salze.

Die mit dem erfindungsgemäßen Verfahren erhältlichen wässrigen Dispersionen haben einen Feststoffgehalt von 30 bis 75 Gew%, vorzugsweise von 40 bis 65 Gew%. Die Dispersionen eignen sich zur Verwendung als Bindemittel beispielsweise in bauchemischen Produkten in Verbindung mit anorganischen, hydraulisch abbindenden Bindemitteln wie Zement, Gips, Wasserglas. Ferner als Bindemittel für Beschichtungsmittel, beispielsweise Farben, und für Klebemittel oder als Beschichtungs- bzw. Bindemittel für Textilien und Papier.

Bevorzugt ist die Verwendung in Beschichtungsmittel zur Herstellung von elastischen Beschichtungen. Dazu werden die Dispersionen mit den dabei üblichen Zusatzstoffen in dem Fachmann bekannten Rezepturen abgemischt. Gebräuchliche Zusatzstoffe sind Füllstoffe wie Kreide, Pigmente wie Titandioxid oder Eisenoxide, Antischaummittel wie Silikonentschäumer, Verdickungsmittel, Filmbildehilfsmittel und UVPhotoinitiatoren, beispielsweise solche auf der Basis von aromatischen Ketonen wie Benzophenone. Besonders bevorzugt ist die Anwendung im Außenbereich, beispielsweise in Außenfarben und Putzen, insbesondere auf mineralischen Untergründen.

Mit der erfindungsgemäßen Verfahrensweise werden weiche Vinylester/Olefin-Mischpolymer-Bindemittel zugänglich, deren Teilchen durch den Anteil an hartem Schutzkolloid mit einer harten Hülle umgeben sind, die der Verschmutzung, auch im unvernetzten Zustand entgegenwirkt, ohne die Tieftemperaturelastizität zu reduzieren. Im Gegensatz dazu werden mit der Verfahrensweise gemäß der EP-A 602763 Teilchen erhalten, welche aufgrund der kovalenten Anbindung der Hülle an den weichen Kern und aufgrund des hohen Anteils an harter Hülle zwar auch verschmutzungsresistent sind, aber keine befriedigende Tieftemperaturelastizität zeigen.

Die nachfolgenden Beispiele dienen der weiteren Erläuterunc der Erfindung:

### Beispiel 1 (Herstellung des Schutzkolloids):

Eine Mischung aus 744 kg Wasser, 425 g Mercaptopropionsäure, 30.4 kg einer 25 %-igen Lösung eines ethoxylierten und sulfatierten Fettalkohols, 12.8 kg Methacrylsäure, 82.9 kg Methylmethacrylat und 10.6 kg Butylacrylat wurde auf 80°C erhitzt. Zu dieser Mischung wurde kontinuierlich in 4 Stunden eine Voremulsion bestehend aus 1490 kg Wasser, 8 kg Mercaptopropionsäure, 231 kg einer 35 %-igen Lösung eines ethoxylierten und sulfatierten Nonylphenols mit 25 EO-Einheiten, 157 kg Methacrylsäure, 1650 kg Methylmethacrylat und 208 kg Butylacrylat zudosiert. Parallel wurde innerhalb von 5 Stunden eine Lösung aus 7.7 kg Ammoniumpersulfat und 172 kg Wasser zudosiert. Nach Dosierende wurde noch eine Stunde bei 80°C gerührt und anschließend abgekühlt. Man erhielt eine Dispersion mit einem Festgehalt von 44 %, einem pH-Wert von 2.8, einer Teilchengröße von 130 nm, einer Tg von 80°C und einem K-Wert von 33.

### Beispiel 2 (Herstellung des Vinylester-Polymerisats):

Eine Mischung aus 2170 g Wasser und 1460 g des Schutzkolloids aus Beispiel 1 wurde auf 55°C erhitzt. Gleichzeitig wurden 75 bar Ethylen aufgedrückt. Zu dieser Mischung wurden kontinuierlich innerhalb 4 Stunden eine Mischung aus 3110 g Vinylacetat und 1580 g VeoVa^{R}11 zudosiert. Parallel wurde innerhalb von 4 Stunden eine Lösung aus 1540 g Wasser, 573 g einer 20 %-igen Lösung von Dihexylsulfosuccinat, 67 g einer 40 %-igen Lösung eines ethoxylierten C₁₂-C₁₅-Fettalkohols mit 15 Ethylenoxid-Einheiten, sowie innerhalb von 5 Stunden eine Lösung aus 58 g t-Butylhydroperoxid in 402 g Wasser und eine Lösung von 38 g Hydroxymethansulfinat in 720 g Wasser zudosiert. Der pH-Wert wurde mit Ammoniak auf ca. 7.5 gehalten. Nach Dosierende wurde noch eine Stunde bei 55°C gerührt und anschließend abgekühlt. Das restliche Ethylen wurde abgelassen und die Dispersion durch Zugabe von 30 g einer 10 %-iger Lösung von t-Butylhydroperoxid und 60 g einer 5 %-igen Lösung von Hydroxymethansulfinat von Restmonomer befreit. Man erhielt eine Dispersion mit einem Festgehalt von 56.6 %, einem pH-Wert von 7.9, einer Teilchengröße Dw von 250 nm, einer Tg von -35°C und einer Viskosität von 8200 mPas.
1000 g der so erhaltenen Dispersion wurden mit 1 g Glycidylmethacrylat und 50 mg Tributylmethylammoniumchlorid versetzt und 2 Stunden bei 50°C gerührt. Die so erhaltene Dispersion wurde in der anwendungstechnischen Prüfung eingesetzt.

### Vergleichsbeispiel 1:

Als Vergleich wurde in der anwendungstechnischen Prüfung eine im Handel erhältliche wässrige Dispersion eines Styrol/Butylacrylat-Copolymers mit einer Tg von -30°C und einem Photoinitiator auf der Basis von aromatischen Ketonen eingesetzt.

### Anwendungstechnische Prüfung:

Mit den Dispersionen aus Beispiel 2 bzw. dem Vergleichsbeispiel 1 wurde mit nachfolgender Rezeptur (Tabelle 1) eine Außenfarbe mit einer Pigment-Volumen-Konzentration (PVK) von 33 hergestellt.

### Bestimmung der mechanische Festigkeit:

Von den auf diese Weise erhaltenen Farben wurden Filme mit einer Trockenschichtstärke von ca. 300 µm gezogen. Die Reißdehnung (RD) und Reißfestigkeit (RF) dieser Filme wurde bei +20°C, 0°C, -10°C und -20°C bestimmt. Die Ergebnisse sind in Tabelle 2 zusammengefaßt.

### Bestimmung der Anschmutzungsneigung:

Die Filme wurden unterschiedlichen Lagerungsbedingungen unterworfen:a) Dunkellagerung: Lagerung bei Raumtemperatur und Normklima ohne UV-Einwirkung. b) UV-Lagerung: 14 Tage UV-Bestrahlung
Die Anschmutzungsneigung der so gelagerten Filme wurde folgendermaßen bestimmt: Auf die Filme wurde mittels eines Siebs Flugasche aufgesiebt. Nach einer Einwirkungsphase von 30 Minuten wurde die Flugasche vorsichtig abgeklopft und der Grad der Verschmutzung visuell mit einer Notenskala von 0 (nicht verschmutzt) bis 5 (extrem verschmutzt) bewertet. Die Ergebnisse sind in Tabelle 2 aufgeführt.

Die Ergebnisse der Reißdehnungsmessung belegen die deutlich bessere Elastizität der Beschichtungsfilme bei Verwendung der der erfindungsgemäßen Bindemittel. Die Ergebnisse zur Bestimmung der Anschmutzungsneigung zeigen, daß bei Verwendung der erfindungsgemäßen Bindemittel auch nach Dunkellagerung keine Verschmutzung der Beschichtungsfilme resultiert. Im Gegensatz dazu werden Bindemittel gemäß Stand der Technik ohne UV-Vernetzung stark verschmutzt.

**Tabelle 1:**

| Stoff | Menge [g] |
|---|---|
| Wasser | 65.4 |
| Dispex N40 (Polyacrylsäure-Na-Salz, 40% in Wasser) | 3 |
| NaOH 10% | 3 |
| Hydorol W (Konservierungsmittel auf Isothiazolon-Basis) | 2 |
| Kronos 2190 (Titandioxid) | 20 |
| Violett-Etikette (Kreide) | 340 |
| Agitan 281 (Siliconfreier, emulagtorhaltiger Entschäumer) | 3 |
| Bindemittel 57% | 507.9 |
| Irgacure 651 (2,2-dimethoxy-1,2-diphenylethan-1-on, Photoinitiator) | 35.7 |

**Tabelle 2:**

| Bindemittel | Bsp. 2 | V.bsp. 1 |
|---|---|---|
| RD/RF +20°C [%/Nmm⁻²] | 206/1.1 | 185/1.9 |
| RD/RF 0°C [%/Nmm⁻²] | 340/4.6 | 213/5.8 |
| RD/RF -10°C [%/Nmm⁻²] | 238/7.7 | 147/7.5 |
| RD/RF -20°C [%/Nmm⁻²] | 89/11.5 | 97/10.5 |
| Verschmutzung Dunkel-Lagerung | 0 - 1 | 4 |
| Verschmutzung UV-Lagerung | 0 - 1 | 0 - 1 |

## Patentansprüche

1. Verfahren zur Herstellung von vernetzbaren Bindemitteln in Form deren wässrigen Dispersionen durch Polymerisation von Vinylestern und Olefinen in Gegenwart von Schutzkolloid, dadurch gekennzeichnet, daß durch Emulsionspolymerisation in Gegenwart eines Schutzkolloids auf der Basis von (Meth)acrylsäureester-Polymerisaten mit 80 bis 95 Gew%, bezogen auf das Gesamtgewicht des Polymers, Acrylsäure- oder Methacrylsäureester von aliphatischen Alkoholen mit 1 bis 12 C-Atomen, und 5 bis 20 Gew%, bezogen auf das Gesamtgewicht des Copolymers, ethylenisch ungesättigten Mono- oder Dicarbonsäuren, und einer Glasübergangstemperatur Tg des Copolymers von 60°C bis 120°C, Vinylester-Olefin-Mischpolymerisate mit einer Tg kleiner - 10°C hergestellt werden, und nach Abschluß der Polymerisation die vernetzbaren Gruppen durch Umsetzung der Carbonsäuregruppen der (Meth)acrylsäureester-Polymerisate mit ethylenisch ungesättigten Verbindungen, welche zur Veresterung der Carboxylgruppe geeignete Funktionen enthalten, in das Schutzkolloid eingeführt werden.

2. Verfahren nach Anspruch 1, dadurch gekennzeichnet, daß Vinylacetat und Ethylen copolymerisiert werden.

3. Verfahren nach Anspruch 1 bis 2, dadurch gekennzeichnet, daß das Schutzkolloid in einer Menge von 5 bis 20 Gew%, bezogen auf das Gesamtgewicht der Comonomere eingesetzt wird.

4. Verfahren nach Anspruch 1 bis 3, dadurch gekennzeichnet, daß als Schutzkolloid Copolymerisate von Methylmethacrylat, Butylacrylat und Methacrylsäure eingesetzt werden.

5. Verfahren nach Anspruch 1 bis 4, dadurch gekennzeichnet, daß einfach ethylenisch ungesättigte Monoepoxiden oder einfach ethylenisch ungesättigte Isocyanate zur Umsetzung der Carbonsäuregruppen der (Meth)acrylsäureester-Polymerisate eingesetzt werden.

6. Verfahren nach Anspruch 1 bis 5, dadurch gekennzeichnet, daß die ethylenisch ungesättigten Verbindungen in einem molaren Verhältnis zu den Carboxylgruppen des Schutzkolloids von 1 : 1 bis 1 : 2 eingesetzt werden.

7. Verwendung der Verfahrensprodukte nach Anspruch 1 bis 6 als Bindemittel in bauchemischen Produkten in Verbindung mit anorganischen, hydraulisch abbindenden Bindemitteln.

8. Verwendung der Verfahrensprodukte nach Anspruch 1 bis 6 als
Beschichtungs- bzw. Bindemittel für Textilien und Papier.

9. Verwendung der Verfahrensprodukte nach Anspruch 1 bis 6 als Bindemittel für Klebemittel.

10. Verwendung der Verfahrensprodukte nach Anspruch 1 bis 6 als Bindemittel in Beschichtungsmittel zur Herstellung von elastischen Beschichtungen.

## Claims

1. Process for preparing crosslinkable binders in the form of their aqueous dispersions by polymerizing vinyl esters and olefins in the presence of protective colloid, characterized in that vinyl ester-olefin copolymers having a Tg of less than -10°C are prepared by emulsion polymerization in the presence of a protective colloid- based on (meth)acrylate polymers comprising from 80 to 95% by weight, based on the overall weight of the polymer, of acrylates or methacrylates of aliphatic alcohols of 1 to 12 carbon atoms and from 5 to 20% by weight, based on the overall weight of the copolymer, of ethylenically unsaturated monocarboxylic or dicarboxylic acids, said latter copolymer having a glass transition temperature Tg of from 60°C to 120°C, and, after the end of polymerization, the crosslinkable groups are introduced into the protective colloid by reacting the carboxyl groups of the (meth)acrylate polymers with ethylenically unsaturated compounds comprising functions suitable for esterifying the carboxyl group.

2. Process according to Claim 1, characterized in that vinyl acetate and ethylene are copolymerized.

3. Process according to Claim 1 or 2, characterized in that the protective colloid is employed in an amount of from 5 to 20% by weight, based on the overall weight of the comonomers.

4. Process according to Claims 1 to 3, characterized characterized in that copolymers of methyl methacrylate, butyl acrylate and methacrylic acid are employed as protective colloid.

5. Process according to Claims 1 to 4, characterized in that monoethylenically unsaturated monoepoxides or monoethylenically unsaturated isocyanates are employed for reacting the carboxyl groups of the (meth)acrylate polymers.

6. Process according to Claims 1 to 5, characterized in that the ethylenically unsaturated compounds are employed in a molar ratio to the carboxyl groups of the protective colloid of from 1 : 1 to 1 : 2.

7. Use of the products of the process according to Claims 1 to 6 as binders in architectural chemical products in conjunction with inorganic, hydraulically setting binders.

8. Use of the products of the process according to Claims 1 to 6 as coating materials or binders for textiles and paper.

9. Use of the products of the process according to Claims 1 to 6 as binders for adhesives.

10. Use of the products of the process according to Claims 1 to 6 as binders in coating materials for producing elastic coatings.

## Revendications

1. Procédé de préparation de liants réticulables sous forme de leurs dispersions aqueuses par polymérisation d'esters vinyliques et d'oléfines en présence de colloïde protecteur, caractérisé en ce que l'on prépare des copolymères d'ester vinylique/oléfine ayant une Tv inférieure à -10°C par polymérisation en émulsion en présence d'un colloïde protecteur à base de polymères de (méth)acrylate comprenant de 80 à 95% en poids, par rapport au poids total du polymère, d'acrylates ou de méthacrylates d'alcools aliphatiques ayant de 1 à 12 atomes de carbone, et de 5 à 20% en poids, par rapport au poids total du copolymère, d'acides mono- ou dicarboxyliques éthyléniquement insaturés, et avec une température de transition vitreuse Tv du copolymère de 60°C à 120°C, et après la fin de la polymérisation, on introduit les groupes réticulables dans le colloïde protecteur par réaction des groupes acide carboxylique des polymères de (méth)acrylate avec des composés éthyléniquement insaturés renfermant des fonctions appropriées pour l'estérification du groupe carboxy.

2. Procédé selon la revendication 1, caractérisé en ce que l'acétate de vinyle et l'éthylène sont copolymérisés.

3. Procédé selon les revendications 1 à 2, caractérisé en ce que le colloïde protecteur est utilisé en une quantité de 5 à 20% en poids, par rapport au poids total des comonomères.

4. Procédé selon les revendications 1 à 3, caractérisé en ce que l'on utilise des copolymères de méthacylate de méthyle, d'acrylate de butyle et d'acide méthacrylique en tant que colloïde protecteur.

5. Procédé selon les revendications 1 à 4, caractérisé en ce que l'on utilise des monoépoxydes monoéthyléniquement insaturés ou des isocyanates monoéthyléniquement insaturés pour la réaction des groupes acide carboxylique des polymères de (méth)acrylate.

6. Procédé selon les revendications 1 à 5, caractérisé en ce que les composés éthyléniquement insaturés sont utilisés à un rapport molaire avec les groupes carboxy du colloïde protecteur de 1:1 à 1:2.

7. Utilisation des produits de procédé selon les revendications 1 à 6 en tant que liants dans des produits chimiques de construction en association avec des liants inorganiques durcissant par voie hydraulique.

8. Utilisation des produits de procédé selon les revendications 1 à 6 en tant que compositions de revêtements ou liants pour textiles et papier.

9. Utilisation des produits de procédé selon les revendications 1 à 6 en tant que liants pour adhésifs.

10. Utilisation des produits de procédé selon les revendications 1 à 6 en tant que liants dans des compositions de revêtements destinées à la production de revêtements élastiques.
